Europäisches Patentamt

**European Patent Office**

Office européen des brevets

(19)

(11) Numéro de publication: **0 267 057**
**B1**

(12) ## FASCICULE DE BREVET EUROPEEN

(45) Date de publication du fascicule du brevet:
**31.10.90**

(51) Int. Cl.⁵: **F16H 37/12**, G09F 19/02

(21) Numéro de dépôt: **87401899.7**

(22) Date de dépôt: **05.08.87**

(54) Dispositif d'entraînement d'objets mobiles suivant des trajectoires relatives alternativement de même sens puis de sens opposés, application aux enseignes et objets animés.

(30) Priorité: **05.08.86 FR 8611302**

(43) Date de publication de la demande:
**11.05.88 Bulletin 88/19**

(45) Mention de la délivrance du brevet:
**31.10.90 Bulletin 90/44**

(84) Etats contractants désignés:
**AT BE CH DE ES FR GB GR IT LI LU NL SE**

(56) Documents cités:
FR-A- 2 486 611
US-A- 2 476 742
US-A- 2 711 603
US-A- 2 791 853
US-A- 3 022 594

(73) Titulaire: **Richaud, Michel Jean Pierre, 226 rue de Vaugirard, F-75015 Paris(FR)**

(72) Inventeur: **Richaud, Michel Jean Pierre, 226 rue de Vaugirard, F-75015 Paris(FR)**

(74) Mandataire: **Schrimpf, Robert et al, Cabinet Regimbeau 26, Avenue Kléber, F-75116 Paris(FR)**

## Description

L'invention présentée concerne comme décrite dans le préambule de la revendication 1 un dispositif mécanique permettant à des objets mobiles placés à proximité (filtres, écrans, sujets, essuie glace, etc...) d'avoir des trajectoires de va et vient de même sens puis de sens opposés de façon cyclique, grâce à l'arrêt d'un objet pendant un demi-cycle - demi va et vient - provoqué par l'interruption du mouvement de transmission de celui-ci.

Il existe des ensembles mécaniques d'engrenages dentés partiellement, qui en contact avec des roues dentées sur toute leur périphérie transmettent ou ne transmettent pas un mouvement de sortie discontinu et oscillant. Un tel dispositif est décrit notamment dans la demande de brevet: FR-A 2 486 611. Ces dispositifs utilisent l'absence de dents sur engrenages ou courroies (dont les dents seraient tournées vers l'extérieur), mais de tels dispositifs même doublés ne permettent pas que des mouvements de même sens changent leur sens de trajectoire.

L'invention vise à apporter par rapport à de tels dispositifs l'adjonction d'un mouvement opposé produisant des mouvements cycliques de convergences et de divergences précédant un retour aux mouvements de même sens.

Selon une première caractéristique comme décrite dans la partie caractérisante de la revendication 1, le dispositif comprend:

a/ une pluralité de moyens d'entraînement dentés accouplés à un axe menant, dont l'un au moins est dépourvu de dents sur une partie de sa périphérie,

b/ un même nombre de pignons dentés menés indépendants entre eux et en prise respectivement avec les moyens d'entraînement dentés, et

c/ des tiges pivotantes accouplées en position excentrée sur les pignons menés d'une part et à des portes objets d'autre part pour être entraînées à pivotement par les pignons menés.

En dehors de la roue ou de la courroie - à dents tournées vers l'extérieur - emtièrement dentée, les autres moyens d'entraînement montés sur le même axe et solidaires entre eux, seront dépourvus de dents sur une zone correspondant à la demi-circonférence des pignons menés.

De même, le nombre de dents des périphéries des moyens d'entraînement sera un multiple du nombre de dents des pignons menés, par exemple de 3 fois ou 4 fois supérieur. De préférance, les tiges pivotantes sont reliées respectivement aux pignons dentés menés par l'intermédiaire de biellettes.

Sur cet ensemble de roues dentées et de biellettes, on pourra ajouter un contact électrique adapté pour être fermé sélectivement, tel qu'un système de contact mercure sollicité contre une rampe portée par l'une des roues dentées, par exemple pour l'allumage séquentiel d'un tube à décharge représentant une paire de lunettes dans le cadre de l'application à la réalisation d'une enseigne lumineuse.

Dans le cadre de cette enseigne lumineuse, les porte-objets qui auront des trajectoires de même sens puis de sens opposés, porteront des filtres de couleur s'intercalant entre une source lumineuse et un faisceau de fibres optiques groupés, dont les extrémités seront disposées afin de garnir l'intérieur de la représentation des yeux dans l'enseigne en question. La lumière colorée passant au travers des filtres, figurera la présence des iris et leurs mouvements de va et vient.

Le nombre d'ensemble: roue d'entraînement + roue menée + biellette n'étant pas limité nous associeront à l'un de ces pignons dentés menés la charge d'actionner un jeu de lamelles articulées en losange pour occulter sélectivement le rayon lumineux des fibres optiques.

A titre d'illustration des dessins sont joints qui présentent:

Figure 1, le détail des engrenages E1, E2, E3, leur système de triangles B, D, permettant de faire pivoter des objets O et leur contact avec les roues dentées R (totalement ou partiellement).

Figure 2, vue du dessus: les rapports de développement des roues dentées et leurs conséquences sur la tringlerie.

Figure 2b, section selon TT' de deux roues menées et représentation des biellettes B1, B2 partant des axes excentrés de pivot A.

Figure 3, l'ensemble vu en coupe selon l'axe YY'.

Figure 4, exemple de mise en contact, par basculement d'une amppoule de mercure, d'un circuit électrique complémentaire.

Figure 5, système d'occultation d'un faisceau lumineux par resserrement ou ouverture d'un jeu de lamelles articulées en losange.

Figure 6, déroulement de diverses séquences sur une enseigne lumineuse destinée aux opticiens, mettant en application l'utilisation d'écrans (filtres de couleurs ) constituant les objets mobiles, en va et vient, se déplaçant devant une surface lumineuse et modifiant la couleur et la forme de la lumière. Par la présence des fibres optiques dont le contour illustre la représentation de deux yeux, l'ombre portée ( la couleur portée ) en se déplaçant devant l'origine des fibres optiques apparaîtra dans les yeux comme deux iris effectuant des mouvevements de va et vient.

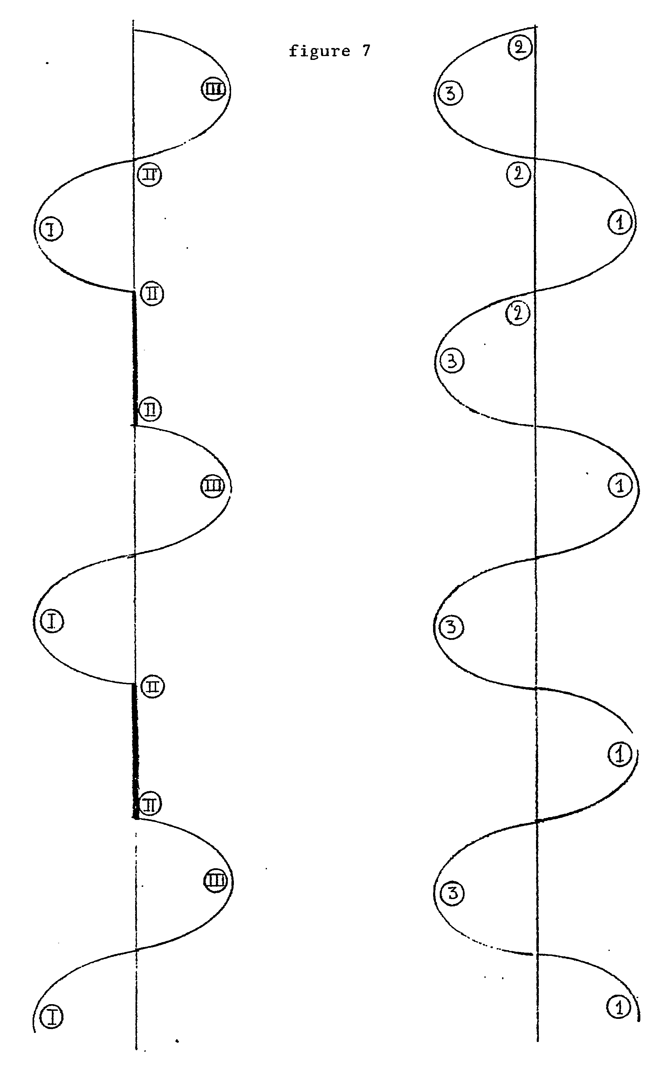

La figure 7, représente sous forme sinusoîdale les trajectoires comparées des deux mobiles successivement en phase puis en opposition de phase, le mouvement d'un des mobiles étant sus pendu pendant une demie période.

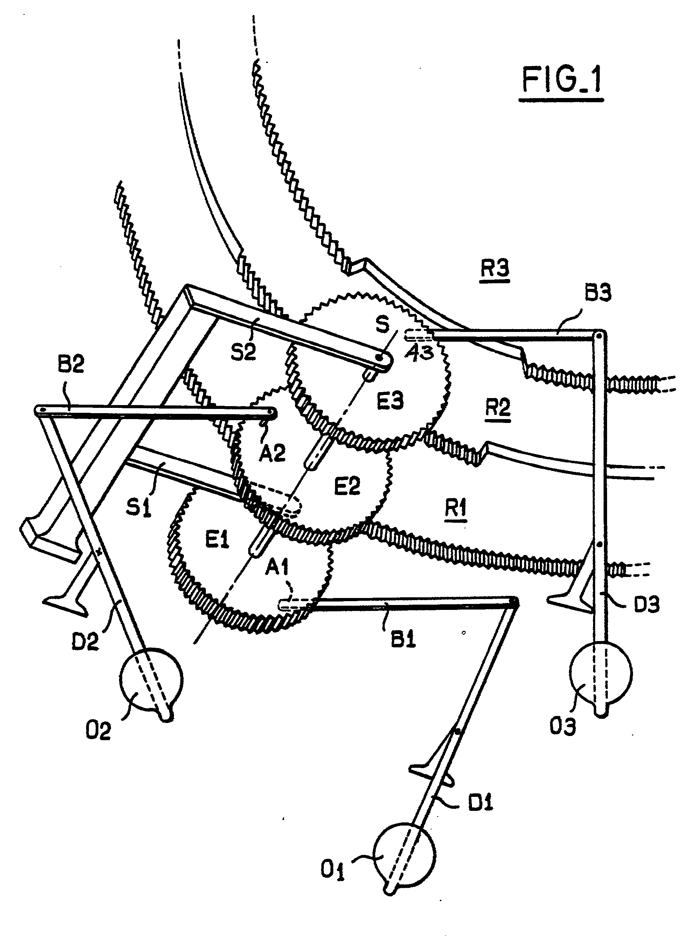

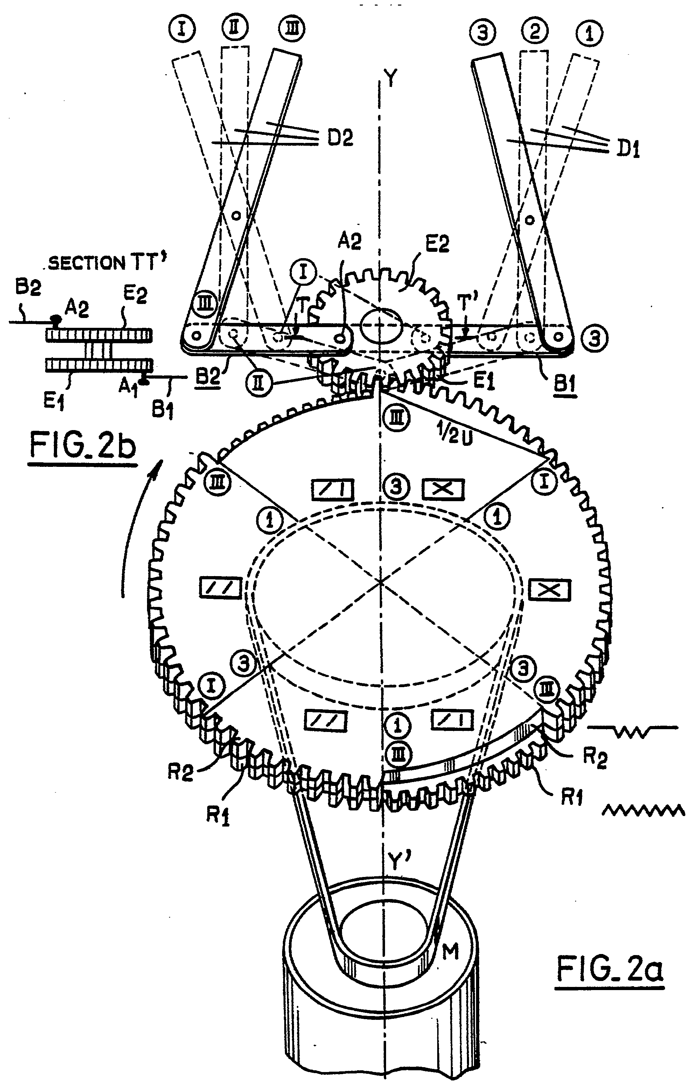

En référence aux figures 1 et 2 ce dispositif est constitué par deux, trois ensembles d'engrenages ou plus. Entraînées par une superposition de roues dentées solidaires: R1, R2, R3 dont l'une au moins est totalement pourvue de dents, des roues dentées E1,E2,E3 sont placées sur le même axe virtuel S' S" de façon qu'elles puissent tourner librement et indépendamment malgrè la présence de petits axes A1,A2,A3 fixés en excentré en bordure de leurspignons, il y a donc lieu de prévoir des supports d'engrenages S1 et S2 situés respecti vement entre E1 et E2 puis entre E3 et suivants. Les petits axes excentrés A1,A2,A3 actionnent alors les biellettes B1, B2, B3 qui elles-même agissent sur des

2

bras pivotants D1, D2, D3 dont chaque extrémité est équipée d'un porte objet, ou de l'objet à mouvoir lui-même.

Les roues dentées d'entraînement R1,R2,R3 seront de même diamètre et leur circonférence ( nombre de dents ) un multiple de celles de E, ( 5 fois dans notre exemple figure 2 ) U étant le nombre de dents de la roue menée. Alors que R1 sera dentée sur toute sa périphérie, les autres roues R2,R3 présenteront des secteurs non dentés face aux roues menées E2,E3. Lors de leur rotation, l'apparition de ces secteurs provoquera l'arrêt d'entraînement des roues menées leur faisant face. L'ensemble solidaire R1, R2, R3 continuant à tourner.

Décomposons le travail de R2 dépourvue de dents sur une longueur d'implantation de dents de 1/2 U - figure 2 - le temps de contact avec E2 sera suspendu et l'objet O2 restera immobile alors que O1 con tinuera son va et vient entraîné qu'il est par R1 à l'engrenage complet. A la reprise des dents,E2 reprend sa rotation avec un demi tour de retard par rapport à E1: l'axe A2 se trouvera superposé à A3, cette position entraînant par biellettes interposées un mouvement de même sens( parallèle ) pour O1, O2. La totalité des dents restantes devant être un multiple d'un demi U, après un nouveau secteur sans dents de R2 sur une longueur d'un demi U les axes A1 A2 seront de nouveau diamétralement opposés, ce qui se traduira pour les objets en un mouvement de sens opposés.

Il est à noter que si le nombre total de dents des roues entraînantesest un multiple de celui des dents menées et les secteurs de base dentés et non dentés,des multiples d'un demi U,pour le bon fonctionnement de l'appareil il est à prévoir l'ablation d'une ou deux dents supplémentaires au détriment de la zone dentée d'un demi U lui faisant suite, la dent reprenante étant en décalé par rapport à la dent de décrochage, sachant que la roue menée reste en position inerte dès la disparition de traction de la dernière dent.

Sur la figure 2 les trajectoires de même sens -parallèles- seront représentées par // , les opposées par: X et celles avec un objet immobiles par: /|

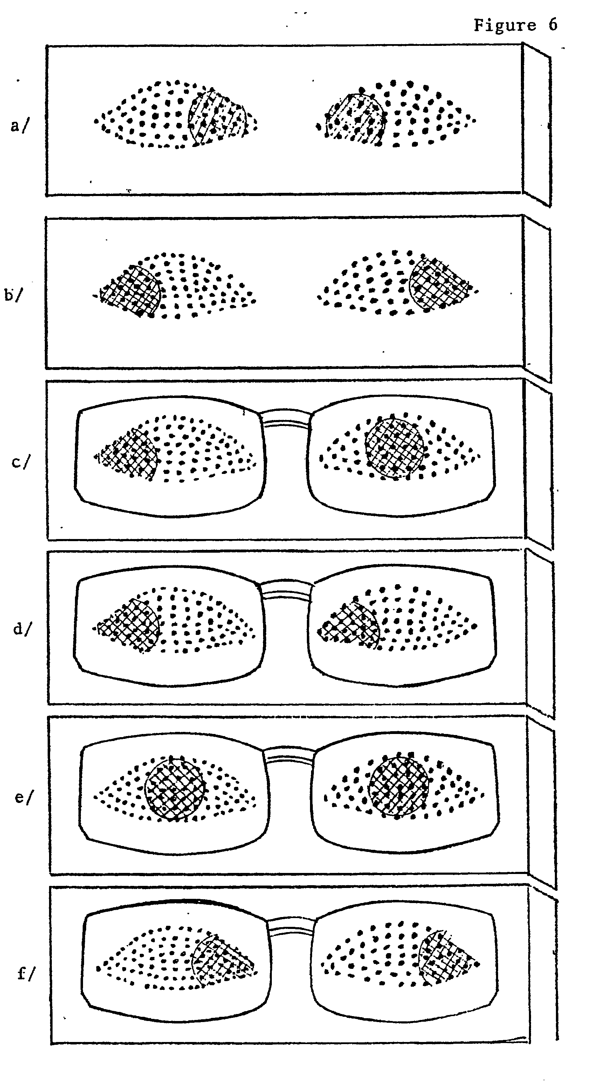

On pourra ajouter un ensemble R3,E3 etc. animant différemment un troisième objet ou produisan t un nouveau travail cyclique différent: dans notre enseigne,E3 va fermer un espace par étirement de quatre plaquettes mobiles L, figure 5.

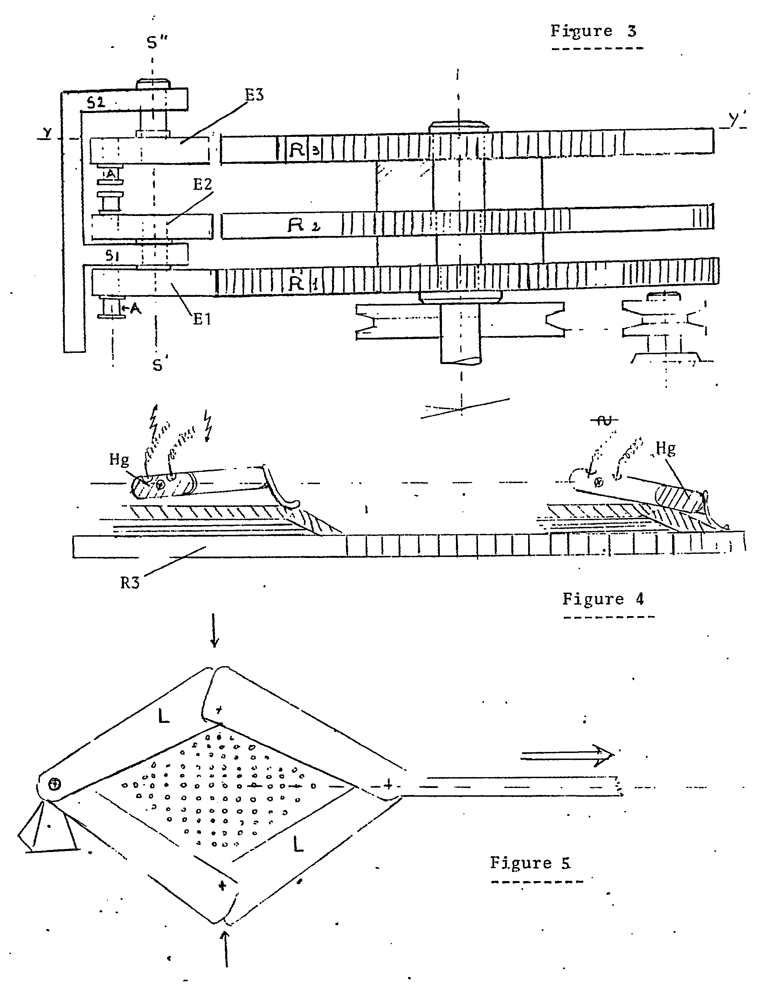

Ce mécanisme, nous l'avons vu est particulièrement adaptable aux enseignes lumineuses pour l'optique et la publicité, figure 6 a, b, c, d, e,f, représentant deux yeux constitués par les points lumineux des extrémités de fibres optiques, dont les autres extrémités seraient illuminés par une source concentrée de lumière rencontrant en obstacle les filtres colorés mobiles O1 O2. Ces petits filtres ronds transmettraient la lumière colorée aux points prédéterminés des iris, qui vont suivre grâce à l'invention une trajectoire convergente divergente puis de même sens. A ce mouvement naturel sera conjugué l'allumage d'une lunette ( le profil d'un tube à décharge - ou un pointillé de fibres optique etc...) pour exprimer que l'apparition d'une lunette supprime le strabisme. Cet allumage par basculement d'une ampoule de mercure ( notre exemple ) est provoqué par la présence d'une rampe solidaire d'une des roues (celle du haut sur la figure 4 ) qui soulève à un moment précis de la rotation la dite ampoule.

Outre les trajectoires de va et vient des objets O1 et O2 , un troisième ensemble R3, E3, B3, D3 peut être à l'origine d'un mouvement de biellettes qui refermera l'accès aux rayons lumineux aboutissant au départ des fibres optiques-figure 5, Ce resserrement de lamelles L articulées en losange déformable, se traduira par l'extinction progressive des fibres aboutissant à l'oeil évoquant le clignement de celui-ci. A son ouverture,les deux iris étant bien placés, la silhouette de la paire de lunette est conjuguée en s'allumant grâce au basculeur mercure comme il est dit plus haut. Les iris poursuivant leur cheminement parallèle.

L'invention peut permettre de symboliser également des faisceaux de projecteurs fouillant le ciel, des flammes dans leurs fluctuations anarchiques de brillance, des essuie-glace farfelus etc... Les roues supplémentaires R3, etc,pouvant toujours créer un travail indépendant et cyclique tandis que le le basculeur mercure mettra sous tension un dispositif électrique.

En variante on peut utiliser des courroies dentées dont les dents tournées vers l'extérieur entraînent au lieu et place de R1, R2, R3, les roues menées E1, E2, E3, ces courroies ayant elles aussi des secteurs sans dents, l'effet sera le même assurant un développement plus grand (programme) et des cycles répétitifs plus nombreux.

**Revendications**

1. Dispositif mécanique adapté pour entraîner plusieurs portes-objets selon une trajectoire relative alternativement de même sens puis de sens opposés,caractérisé par le fait qu'il comprend:

- une pluralité de moyens d'entraînement dentés (R1, R2,R3) accouplés à un axe menant dont l'un au moins est dépourvu de dents sur une partie de sa périphérie.

- un même nombre de pignons dentés menés (E1,E2,E3) indépendants entre eux et en prise respectivement avec les moyens d'entraînement dentés et

- des tiges pivotantes (D1, D2, D3) en position excentrée sur les pignons menés d'une part et à des portes objets (O1, O2, O3) d'autre part pour être entraînes à pivotement par les pignons menés.

2. Dispositif mécanique selon la revendication 1, caractérisé par le fait que les moyens d'entraînement dentés sont formés de roues dentées (R1) et de roues partiellement dentées (R2, R3).

3. Dispositif mécanique selon la revendication 1, caractérisé par le fait que les moyens d'entraînement dentés sont formés de courroies dentées.

4. Dispositif mécanique selon l'une des revendications 1 à 3, caractérisé par le fait que les tiges pivotantes (D1, D2, D3) sont reliées respectivement aux pignons dentés menés par l'intermédiaire de biellettes (B1, B2, B3).

5. Dispositif mécanique selon l'une des revendications 1 à 4, caractérisé par le fait que les zones de l'un au moins des moyens d'entraînement dentés (R2, R3) dépourvues de dents correspondent à la demi-circonférence d'un pignon denté mené.

6. Dispositif mécanique selon l'une des revendications 1 à 5, caractérisé par le fait que les pignons dentés menés (E1, E2, E3) sont portés par un axe commun d'une part et par le fait que les moyens d'entraînement dentés (R1, R2,R3) sont formés de roues dentées solidaires entre elles et portées par ledit axe menant d'autre part.

7. Dispositif mécanique selon l'une des revendications 1à 6, caractérisé par le fait que le nombre de dents des moyens d'entraînement dentés (R1, R2, R3) est un multiple du nombre de dents prévues sur les pignons dentés menés, facteur multiple égal par exemple à 4 ou 5.

8. Dispositif mécanique selon l'une des revendications 1 à 7, caractérisé par le fait qu'il comprend en outre un contact électrique adapté pour être fermé sélectivement, tel qu'un système de contact Hg sollicité contre une rampe portée par l'une des roues dentées, par exemple pour l'allumage séquentiel d'un tube à décharge représentant une paire de lunettes dans le cadre de l'application à la réalisation d'une enseigne.

9. Dispositif mécanique selon l'un des revendications1 à 8, caractérisé par le fait qu'il comprend deux groupes de fibres optiques symbolisant deux yeux d'une enseigne, par le fait que les tiges pivotantes (D1,D2,D3) portent des filtres de couleur (O1,O2), à pivotement en regard des fibres, pour symboliser un déplacement de l'iris.

10. Dispositif mécanique selon la revendication 9, caractérisé par le fait que ledit pignon denté mené associé audit moyen d'entraînement dépourvu de dents sur une partie de sa périphérie, actionne un jeu de lamelles articulées en losange pour occulter sélectivement le rayon lumineux des fibres optiques.

## Patentansprüche

1. Antriebseinrichtung zum Antreiben mehrerer bewegter Objekte längs einer Bahn relativ im Wechsel gleichsinnig und dann gegenläufig, gekennzeichnet durch

- mehrere gezahnte Antriebsmittel (R1, R2, R3), die an eine Führungsachse angeschlossen sind und von denen wenigstens eines auf einem Teil seines Umfangs ohne Zähne ist,

- eine gleiche Anzahl gezahnter Führungsritzel (E1, E2, E3), die voneinander unabhängig sind und mit dem betreffenden gezahnten Antriebsmittel in Eingriff stehen, und

- Schwenkstangen (D1, D2, D3), die einerseits an exzentrischer Stelle mit den Führungsritzeln und andererseits mit den bewegten Objekten (01, 02, 03) verbunden sind, um von den Führungsritzeln geschwenkt zu werden.

2. Antriebseinrichtung nach Anspruch 1, dadurch gekennzeichnet, dass die gezahnten Antriebsmittel von Zahnrädern und von teilweise gezahnten Rädern gebildet sind.

3. Antriebseinrichtung nach Anspruch 1, dadurch gekennzeichnet, dass die gezahnten Antriebsmittel von Zahnriemen gebildet sind.

4. Antriebseinrichtung nach einem der Ansprüche 1 bis 3, dadurch gekennzeichnet, dass die Schwenkstangen (D1, D2, D3) über Schwingarme (B1, B2, B3) mit den betreffenden gezahnten Führungsritzeln verbunden sind.

5. Antriebseinrichtung nach einem der Ansprüche 1 bis 4, dadurch gekennzeichnet, dass die Bereiche, in denen das zumindest eine gezahnte Antriebsmittel (R2, R3) ohne Zähne ist, dem halben Umfang eines gezahnten Führungsritzels entsprechen.

6. Antriebseinrichtung nach einem der Ansprüche 1 bis 5, dadurch gekennzeichnet, dass einerseits die gezahnten Führungsritzel (E1, E2, E3) auf einer gemeinsamen Achse angeordnet sind und dass andererseits die gezahnten Antriebsmittel (R1, R2, R3) von untereinander verbundenen Zahnrädern gebildet sind, die auf der genannten Führungsachse angeordnet sind.

7. Antriebseinrichtung nach einem der Ansprüche 1 bis 6, dadurch gekennzeichnet, dass die Zahl der Zähne der gezahnten Antriebsmittel (R1, R2, R3) ein vielfaches der Zahl der auf den gezahnten Führungsritzeln vorgesehenen Zähne ist, wobei der Multiplikationsfaktor beispielsweise 4 oder 5 beträgt.

8. Antriebseinrichtung nach einem der Ansprüche 1 bis 7, dadurch gekennzeichnet, dass ausserdem ein wahlweise schliessbarer elektrischer Kontakt wie ein Hg Kontaktsystem vorgesehen ist, der unter der Einwirkung einer von einem der gezahnten Räder getragenen Rampe steht, beispielweise zum Zünden einer Entladungsröhre in einer Zündfolge unter Darstellung einer Brille im Rahmen der Anwendung bei der Verwirklichung eines Reklameschilds.

9. Antriebseinrichtung nach einem der Ansprüche 1 bis 8, dadurch gekennzeichnet, dass sie zwei Gruppen optischer Fasern enthält, die die zwei Augen eines Schildes symbolisieren, und dass die Schwenkstangen (D1, D2, D3) Farbfilter (01, 02) tragen und gegenüber den Fasern schwenkbar sind, um eine Verlagerung der Iris zu symbolisieren.

10. Antriebseinrichtung nach Anspruch 9, dadurch gekennzeichnet, dass das genannte gezahnte Führungsritzel, das dem genannten Antriebsmittel zugeordnet ist, das auf einem Teil seines Umfangs ohne Zähne ist, einen Satz von rautenförmig angelenkten Lamellen betätigt, um wahlweise den Lichtstrahl der optischen Fasern abzuschirmen.

## Claims

1. A mechanical device suitable for driving a plurality of means carrying objects over relative alternating paths in the same direction and then in opposite directions, characterized by the fact that it comprises: a plurality of toothed drive means (R1, R2, R3) linked to a drive shaft, with at least one of them being toothless over a portion of its periphery; a corresponding number of driven gear wheels (E1, E2, E3) independant from one another respectively meshing with the toothed drive means; and pivoting rods (D1, D2, D3) excentrically linked to the driven gear wheels and to means carrying objects ($O_1$, $O_2$, $O_3$) so as to be pivotally driven by the driven gear wheels.

2. A mechanical device according to claim 1, characterized by the fact that the toothed drive means comprise toothed wheels and partially toothed wheels.

3. A mechanical device according to claim 1, characterized by the fact that the toothed drive means are constituted by toothed belts.

4. A mechanical device according to any one of claims 1 to 3, characterized by the fact that the pivoting rods (D1, D2, D3) are respectively connected to the driven gear wheels via connecting rods (B1, B2, B3).

5. A mechanical device according to any one of claims 1 to 4, characterized by the fact that the toothless zones of at least one of the toothed drive means (R2, R3) correspond to half the circumference of a toothed driven gear wheel.

6. A mechanical device according to any one of claims 1 to 5, characterized by the fact that the driven toothed gear wheels (E1, E2, E3) are carried on a commun shaft, and by the fact the drive means (R1, R2, R3) are constituted by toothed gear wheels which are constrained to rotate together and are carried on said drive shaft.

7. A mechanical device according to any one of claims 1 to 6, characterized by the fact that the number of teeth in the toothed drive means (R1, R2, R3) is a multiple of the number of teeth provided on the driven toothed gear wheels, with the factor being equal, for example, to four or five.

8. A mechanical device according to any one of claims 1 to 7, characterized by the fact that it further includes an electrical contact suitable for being selectively closed, e.g. a mercury switch contact system urged against a slope carried by one of the toothed wheels, for example for the purpose of sequentially lighting up a discharge tube representing a pair of spectacles when the device is applied to making an illuminated sign.

9. A mechanical device according to any one of claims 1 to 8, characterized by the fact that it includes two groups of optical fibers symbolizing the two eyes of a sign, by the fact that the pivoting rods (D1, D2, D3) carry color filters (01, 02) which pivot in front of the fibers in order to symbolize displacement of the irises.

10. A mechanical device according to claim 9, characterized by the fact that said driven toothed gear wheel associated with said drive means lacking teeth over a portion of its periphery serves to actuate a diamond-shaped set of articulated blades for selectively obstructing the light rays of the optical fibers.

FIG.1

EP 0 267 057 B1

SECTION TT'

FIG. 2b

FIG. 2a

EP 0 267 057 B1

Figure 3
---------

Figure 4
---------

Figure 5
---------

Figure 6

a/

b/

c/

d/

e/

f/

figure 7